(19) Europäisches Patentamt

European Patent Office

Office européen des brevets

(11) EP 0 748 981 A2

## (12) EUROPEAN PATENT APPLICATION

(43) Date of publication:
18.12.1996 Bulletin 1996/51

(51) Int. Cl.$^6$: **F23C 6/04**

(21) Application number: 96109422.4

(22) Date of filing: 12.06.1996

(84) Designated Contracting States:
DE ES FR IT

(30) Priority: 13.06.1995 US 489915

(71) Applicant: PRAXAIR TECHNOLOGY, INC.
Danbury, CT 06810-5113 (US)

(72) Inventor: Chamberland, Ray Paul
Sandy Hook, CT 06482 (US)

(74) Representative: Schwan, Gerhard, Dipl.-Ing.
Elfenstrasse 32
81739 München (DE)

(54) **Staged combustion with reduced generation of both nitrogen oxides and carbon monoxide**

(57) A staged combustion method which can provide reduced carbon monoxide generation along with reduced nitrogen oxides generation wherein the primary stage fluids and the secondary stage fluid are provided into the combustion zone in a defined momentum ratio which departs from unity.

F i g. 1

## Description

Technical Field

This invention relates generally to staged combustion, and, more particularly, to staged combustion wherein oxygen or an oxygen-enriched fluid is used as the oxidant.

Background Art

Nitrogen oxides (NOx) are a significant pollutant generated during combustion and it is desirable to reduce their generation in carrying out combustion. It is known that combustion may be carried out with reduced NOx generation by using technically pure oxygen or oxygen-enriched air as the oxidant as this reduces the amount of nitrogen provided to the combustion reaction on an equivalent oxygen basis. However the use of an oxidant having a higher oxygen concentration than that of air causes the combustion reaction to run at a higher temperature and this higher temperature kinetically favors the formation of NOx.

Staged combustion has been used to reduce NOx generation, particularly when the oxidant is a fluid having an oxygen concentration which exceeds that of air. In staged combustion, fuel and oxidant are introduced into a combustion zone in a substoichiometric ratio and combusted. Due to the excess amount of fuel available for combustion, very few of the oxygen molecules of the oxidant react with nitrogen to form NOx. Additional oxygen is provided to the combustion zone to complete the combustion in a second downstream stage. Because the secondary oxygen is first diluted with furnace gases before it mixes with the unburned fuel, the combustion in the second stage does not occur at very high temperatures, thus limiting the amount of NOx formed.

While the use of staged combustion is very effective for limiting the amount of NOx generated during the combustion, due to the deliberate substoichiometric combustion in the primary stage, the use of staged combustion can result in excessive generation of carbon monoxide (CO), especially in a combustion zone having a short residence time for the combustion reaction.

This problem is recognized by the users of staged combustion and is generally addressed by reducing the degree of staging, thus compromising the low NOx potential of the staged combustion, or increasing the amount of total oxygen supplied to the furnace or combustion zone so that the stoichiometric ratio of the total reactants in the combustion zone exceeds 103 percent. This latter mode of operation, while effective, is costly and wasteful.

Accordingly it is an object of this invention to provide a method for carrying out staged combustion which retains the beneficial low NOx generation of conventional staged combustion practice and also enables one to practice staged combustion with low CO generation without operating with a large degree of excess oxygen.

Summary Of The Invention

The above and other objects, which will become apparent to those skilled in the art upon a reading of this disclosure, are attained by the present invention which is:

A method for carrying out staged combustion with reduced generation of both nitrogen oxides and carbon monoxide comprising:

(A) injecting fuel and primary oxidant from a burner into a combustion zone in a substoichiometric ratio to form a combustion reaction stream having a momentum M1;
(B) combusting fuel and primary oxidant within the combustion reaction stream to produce heat and combustion reaction products including unburned fuel;
(C) injecting secondary oxidant into the combustion zone at a mass flowrate and velocity to form one or more secondary oxidant streams having a total momentum M2 such that M2/M1 is within the range of from 0.09 to 0.70 or within the range of from 2 to 75; and
(D) combusting secondary oxidant with unburned fuel within the combustion zone.

As used herein the term "products of complete combustion" means one or more of carbon dioxide and water vapor.

As used herein the term "products of incomplete combustion" means one or more of carbon monoxide, hydrogen, carbon and partially combusted hydrocarbons.

As used herein the term "unburned fuel" means fuel which has undergone no combustion and/or products of incomplete combustion.

As used herein the term "stoichiometric" means the ratio of oxygen to fuel for combustion purposes. A stoichiometric ratio of less than 100 percent means there is less oxygen present than the amount necessary to completely combust the fuel present, i.e. fuel-rich conditions. A stoichiometric ratio greater than 100 percent means there is more oxygen present than the amount necessary to completely combust the fuel, i.e. excess oxygen conditions.

As used herein the terms "nitrogen oxides" and "NOx" mean one or more of nitrous oxide ($N_2O$), nitric oxide (NO), nitrogen trioxide ($N_2O_3$), dinitrogen tetroxide ($N_2O_4$), nitrogen dioxide ($NO_2$), trinitrogen tetroxide ($N_3O_4$) and nitrogen trioxide ($NO_3$).

As used herein the term "burner" means an apparatus for providing both fuel and oxidant into a combustion zone. A burner may be a unitary piece or may comprise two or more separate pieces.

As used herein the term "firing rate" of a burner means the heat of reaction of the fuel flow from the burner expressed in units of million British Thermal Units per hour or MMBtu/hr higher heating value. Generally, in most industrial applications of this invention, the burner firing rate will be within the range of from 0.25 MMBtu/hr to 15 MMBtu/hr.

Brief Description Of The Drawings

Figure 1 is a simplified overhead view of one embodiment of the staged combustion method of this invention.

Figure 2 is a graphical representation of test results of the invention and those of conventional practice.

Figure 3 is a graphical representation of test results of a preferred embodiment of the invention as well as comparative test results.

Detailed Description

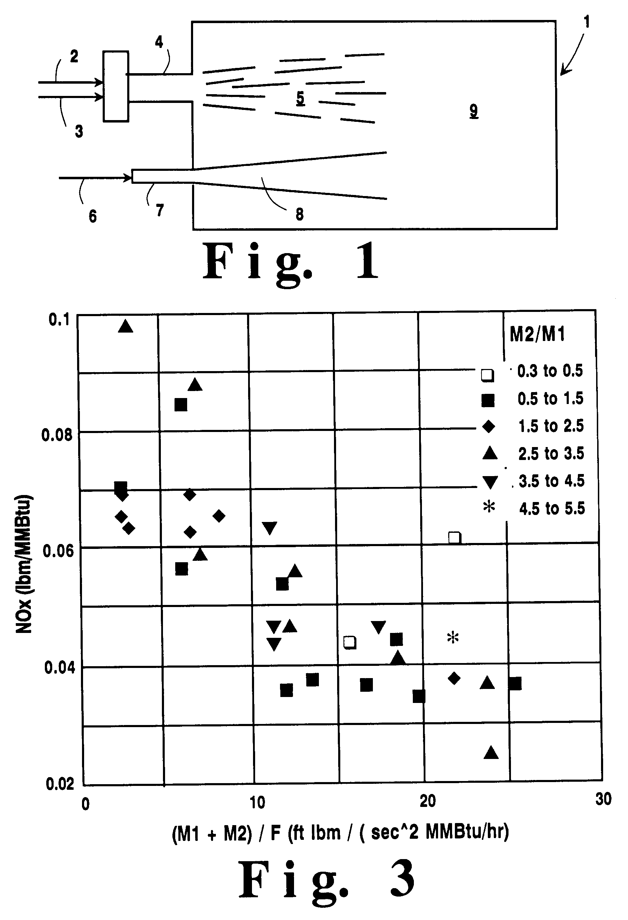

The invention will be described in detail with reference to the drawings. Referring now to Figure 1, there is shown an overhead view of industrial furnace 1. Any industrial furnace which is heated by one or more burners may be used in the practice of this invention. Examples of such furnaces include a steel reheating furnace, an aluminum melting furnace and a glass melting furnace.

Fuel 2 and primary oxidant 3 are provided into combustion zone or furnace 1 through burner 4. The fuel and primary oxidant may be injected into furnace 1 separately or together in a premixed condition. The fuel and primary oxidant may be provided into furnace 1 through a plurality of burners. Any suitable oxy-fuel burner may be employed in the practice of this invention. One particularly preferred oxy-fuel burner for use in the practice of this invention is the fuel jet burner disclosed in U.S. Patent No. 5,411,395 to Kobayashi et al. which is incorporated herein by reference.

The fuel may be any gas or other fluid which contains combustibles which may combust in the combustion zone of the furnace. Among such fuels one can name natural gas, coke oven gas, propane, methane and oil.

The primary oxidant is a fluid having an oxygen concentration of at least 30 volume percent oxygen, preferably at least 90 volume percent oxygen. The primary oxidant may be commercially pure oxygen having an oxygen concentration of 99.5 percent or more.

The fuel and primary oxidant are provided into furnace 1 at flowrates such that the stoichiometric ratio of primary oxygen to fuel is less than 90 percent and preferably is within the range of from 5 to 50 percent of stoichiometric.

The fuel and primary oxidant combust within furnace 1 in a combustion reaction stream 5 to produce heat and combustion reaction products. Combustion reaction products may include products of complete combustion but, owing to the defined substoichiometric primary oxygen to fuel ratio, will include unburned fuel.

The incomplete combustion of the fuel with the primary oxidant enables the combustion of fuel and primary oxidant to proceed at a substantially lower temperature than would otherwise be the case, thus reducing the tendency of NOx to form.

Secondary oxidant 6 is injected into the combustion zone of the furnace through lance 7 at a point spaced from where the fuel and primary oxidant are injected into the furnace to form secondary oxidant stream 8. In the preferred practice of this invention one secondary oxidant stream 8 will be used for each separate combustion reaction stream 5, although a plurality of oxidant streams may be used for each combustion reaction. The secondary oxidant is in the form of a fluid having an oxygen concentration of at least 30 mole percent, preferably at least 90 mole percent. The secondary oxidant may be commercially pure oxygen. Although any suitable oxygen lance may be used to inject the secondary oxidant into the furnace in the practice of this invention, it is preferred that the secondary oxidant be injected into the furnace using the gas injection lance disclosed in U.S. Patent No. 5,295,816 to Kobayashi et al. which is incorporated herein by reference. The secondary oxidant is provided into the combustion zone or the furnace at a flowrate such that, when added to the primary oxidant, establishes a stoichiometric ratio with the fuel of at least 90 percent, and preferably within the range of from 95 to 110 percent. When the stoichiometric ratio of the primary and secondary oxidant to the fuel is less than 100 percent, the remaining oxygen needed to achieve complete combustion of the fuel within the furnace may be provided by infiltrating air.

The fuel and primary oxidant are injected into furnace 1 to form combustion reaction stream 5 having a flowrate and a velocity having a momentum $M_1$, and the secondary oxidant is injected into furnace 1 to form one or more secondary oxidant streams 8 having a total momentum $M_2$ such that $M_2/M_1$ is within the range of from 2 to 75 or within the range of from 0.09 to 0.70. Preferably $M_2/M_1$ is within the range of from greater than 2 to 35 or within the range of from 0.28 to 0.70. Generally, in most industrial applications of this invention, $M_1$ will be within the range of from 0.5 ft lbm/sec$^2$ to 190 ft lbm/sec$^2$, and $M_2$ will be within the range of from 1 ft lbm/sec$^2$ to 525 ft lbm/sec$^2$.

After passage through a portion of the combustion zone, combustion reaction stream 5 and secondary oxidant stream 8 mix together, such as in region 9, and the secondary oxidant combusts with the unburned fuel of the combustion reaction stream serving to complete the combustion of the fuel and provide additional heat to the furnace.

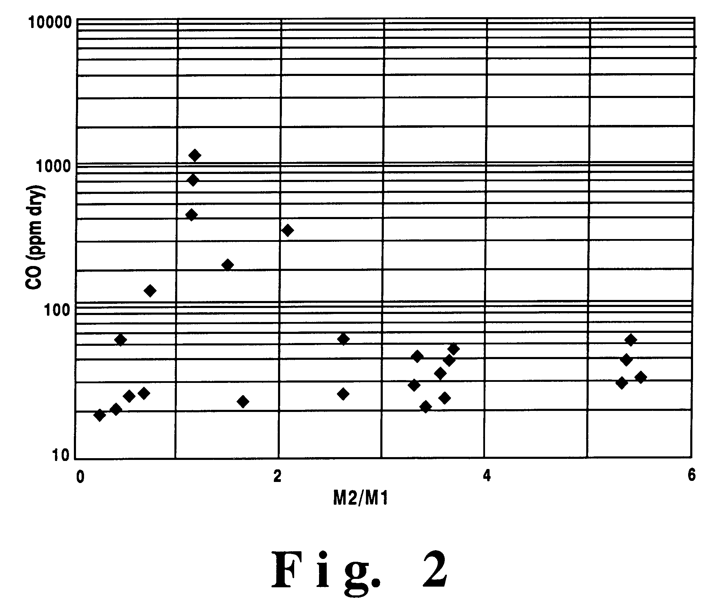

Figure 2 illustrates the results of tests of the invention, as well as results obtained with conventional staged combustion practice, on the generation of carbon monoxide. In each example and comparative example whose results are reported in Figure 2, one combustion reaction stream and one secondary oxidant stream was used. In each of these examples and comparative examples, the fuel used was methane, both the primary and the secondary oxidants were a fluid comprising 100 mole percent oxygen, and the stoichiometric ratio of the primary oxidant to the fuel was 25 percent. The secondary oxidant was provided at a flowrate such that the stoichiometric ratio of the sum of the primary and secondary oxidants to the fuel was 103 percent. The burner employed was that disclosed in U.S. Patent No. 5,411,395 and the lance employed was that disclosed in U.S. Patent No. 5,295,816. As can be seen from the results reported in Figure 2, the generation of CO using the momentum ratio of the invention was significantly below that obtained with conventional staged combustion practice wherein the momentum of the primary jet is similar to that of the secondary jet, i.e. a momentum ratio of about 1.0.

While not wishing to be held to any theory, it is believed that the beneficial low CO generation of the invention is due to the dominance of one of the jets over the other resulting from the defined momentum ratio of the invention. When one of the jets becomes dominant, it entrains the other jet to form an enlarged combustion reaction stream. For example, at M2/M1 equal to or greater than 2, the secondary oxidant jet dominates and entrains the primary jet, and at M2/M1 equal to or less than 0.7, the primary jet dominates and entrains the secondary jet. In this way sufficient oxygen is brought into the vicinity of the fuel to achieve complete combustion of most of the CO to $CO_2$ despite the initial deeply staged or deeply substoichiometric conditions of the primary jet. In conventional practice, with the momentum ratio of the jets at about one, neither of the primary or the secondary jets dominates the other, allowing some CO to remain incompletely combusted. While the conventional practice may be acceptable in conventional staged combustion practice where the first step is only slightly substoichiometric, it leads to unacceptably high CO generation in deeply staged practice, especially when the first stage is carried out at a stoichiometric ratio of from 5 to 50 percent.

Another conventional practice to overcome the CO emission problem is to use multiple secondary oxygen jets to surround the primary fuel rich flame. Typically three to eight secondary oxygen jets are equally spaced in a concentric annular circle around the primary flame. Good mixing of the products of incomplete combustion from the primary flame with the secondary oxygen is achieved, resulting in the low CO emissions. Tests have shown, however, that NOx emissions tend to increase with the number of secondary oxygen jets. Furthermore, the mechanical design of the burner becomes more complex and costly with multiple oxygen jets.

In a preferred embodiment of the invention, wherein the generation of NOx is maintained very low while not compromising the advantageous low CO generation, the quantity (M1 + M2)/F is within the range of from 14 to 54 ft lbm/($sec^2$ MM Btu/hr.), where F is the firing rate of the burner from which the fuel and primary oxidant is provided into the furnace. Surprisingly, it has been found that differences in the momentum ratio M2/M1, while having a significant effect on the generation of CO, have little or no effect on the generation of NOx. However, variations in the burner momentum flux, i.e. (M1+M2)/F , significantly affect the generation of NOx. This is illustrated in Figure 3 which shows the NOx generation results from various tests, using procedures similar to those described in connection with the tests reported in Figure 2, for various burner momentum flux values.

As can be seen from the results reported in Figure 3, when the burner momentum flux drops below about 14 ft lbm/($sec^2$ MM Btu/hr.), there is experienced a significant rise in the level of NOx generated. It is believed that as the momentum flux decreases below about 14 ft lbm/($sec^2$ MM Btu/hr.), the amount of furnace gases entrained into the primary and secondary jets before they interact decreases to a level which allows the combustion reaction to occur at a higher temperature which, in turn, increases the tendency of NOx to form.

Now by the use of the method of this invention, one can carry out staged combustion, not only for the known advantage of low NOx generation, but also with beneficially low CO generation, without losing the low NOx effect.

Although the invention has been described in detail with reference to certain preferred embodiments, those skilled in the act will recognize that there are other embodiments of the invention within the spirit and the scope of the claims.

**Claims**

1. A method for carrying out staged combustion with reduced generation of both nitrogen oxides and carbon monoxide comprising:

    (A) injecting fuel and primary oxidant from a burner into a combustion zone in a substoichiometric ratio to form a combustion reaction stream having a momentum M1;
    (B) combusting fuel and primary oxidant within the combustion reaction stream to produce heat and combustion reaction products including unburned fuel;
    (C) injecting secondary oxidant into the combustion zone at a mass flowrate and velocity to form one or more secondary oxidant streams having a total momentum M2 such that M2/M1 is within the range of from 0.09 to 0.70 or within the range of from 2 to 75; and
    (D) combusting secondary oxidant with unburned fuel within the combustion zone.

2. The method of claim 1 wherein M2/M1 is within the range of from 2 to 35 or within the range of from 0.28 to 0.70.

3. The method of claim 1 wherein the burner has a firing rate F and the quantity $(M1 + M2)/F$ is within the range of from 14 to 54 ft lbm/(sec$^2$ MM Btu/hr.).

4. The method of claim 1 wherein less than two secondary oxidant streams are employed.

5. The method of claim 1 wherein the substoichiometric ratio of step (A) is within the range of from 5 to 50 percent.

# Fig. 1

# Fig. 3

Fig. 2